# EUROPEAN PATENT SPECIFICATION

(11) **EP 0 455 498 B1**
(45) Date of publication and mention of the grant of the patent: **11.09.1996**
(21) Application number: 91304004.4
(22) Date of filing: 02.05.1991
(51) Int. Cl.: A47J 37/12

(54) **Deep fryer**
Fritiergerät
Friteuse

(30) Priority: 04.05.1990 GB 9010177
(43) Date of publication of application: 06.11.1991
(73) Proprietor: MOULINEX SWAN HOLDINGS LIMITED, Birmingham B1 3DL (GB)
(72) Inventor: Ettridge, Ian Geoffrey, Stourton, West Midlands, DY7 6SN (GB)
(74) Representative: Stonehouse, Sidney William

(56) References cited:
- EP-A- 0 212 876
- GB-A- 2 098 753
- US-A- 3 101 043
- DATABASE WPI Week 7444, Derwent Publications Ltd., London, GB; AN 74-76907V & SU-A-402 358 (BELYAEV M I ET AL)

## Description

This invention relates to a deep fryer of the kind comprising a vessel in which a liquid cooking medium, typically oil or melted fat, is heated, and a basket in which foodstuff to be fried is supported and is lowered into the vessel to immerse the foodstuff in the cooking medium.

Deep fryers of the kind set forth are known in which the vessels include electric heating means for heating the cooking medium in the vessel. It is also known for the baskets to have handles by which they are manually lowered into and raised out of the vessels, and for the baskets to be lowered and raised in the vessel by power driven means.

When foodstuff is introduced into the cooking medium the temperature of the medium drops. The greater the quantity of foodstuff that is introduced the greater is the drop in the temperature of the medium. It is usual for the cooking medium to be heated to the required frying temperature, typically 180-200°C, before the foodstuff is introduced. It can take an appreciable time for the temperature to recover to the required level. Indeed in some instances where the fryers have automatically timed cooking cycles with no manual over-ride and the foodstuff has been introduced into the medium in a frozen state it has not been possible for the cooking medium to return to the required frying temperature in the allotted time in the cooking cycle. In consequence the foodstuff has not been sealed, or not properly so, and has tended to absorb a relatively high volume of the cooking medium. Poor cooking results in these circumstance which is undesirable and may give rise to health risks.

It is known from EP-A-212876 to provide a deep fryer comprising a vessel in which a cooking medium is heated, a basket in which foodstuff to be fried is supported and lowered into the vessel to immerse the foodstuff in the cooking medium, transport means operative to cause the basket to be automatically raised and lowered in the vessel during a cooking cycle to raise the foodstuff out of and immerse it again into the cooking medium, and control means for controlling the transport means, adjustable by the operator, to vary the number of times the basket is automatically raised and lowered during a cooking cycle and/or the time or times within the cycle at which the basket is automatically raised and lowered, and including monitoring means for monitoring the temperature of the cooking medium during a cooking cycle. In this arrangement the raising and lowering of the basket is entirely automatically controlled from when the operator operates the control means to, initiate a cooking cycle.

The preamble of claim 1 corresponds to the teaching of GB-A-2098753.

An aim of the present invention is to provide a deep fryer which gives the operator more control of the cooking of the foodstuff in a cooking cycle.

According to the present invention a deep fryer is provided comprising a vessel in which a cooking medium is heated; a basket in which foodstuff to be fried is supported and lowered into the vessel to immerse the foodstuff in the cooking medium; transport means operative to cause the basket to be lowered into the cooking medium at the start of a cooking cycle and raised from it at the end of said cooking cycle, the transport means being further operative to cause the basket to be automatically raised and subsequently lowered in the vessel a plurality of times during the cooking cycle to raise the foodstuff out of and immerse it again into the cooking medium, and control means for controlling the transport means including an electronic memory providing for a range of cooking cycles, selectable by the operator, of varying times and temperatures and which programmes the number of times the basket is automatically raised and lowered during any selected cooking cycle and/or the time or times within the cycle at which the basket is automatically raised and lowered, and also including monitoring means for monitoring the temperature of the cooking medium during any selected cooking cycle, characterised in that a control is provided in association with the control means operable by the operator during any selected cooking cycle to raise the basket from the cooking medium to allow inspection of the foodstuff and further operable to lower the basket into the cooking medium again and resume the cooking cycle, and in that there is means for passing hot air over the foodstuff when the basket is raised from the cooking medium during a cooking cycle.

The control operable by the operator allows the operator to inspect the progress of the cooking of the foodstuff in a cooking cycle in case there is any doubt about the suitability of the cycle selected by the control unit.

Raising and lowering the basket in the course of a cooking cycle facilitates and accelerates recovery of the cooking medium to the required cooking temperature. Sealing of the foodstuff held in the basket for frying is assisted in consequence of this.

Preferably the transport means operates automatically to raise the basket to lift the foodstuff it holds out of the cooking medium soon after the initial lowering of the basket and immersion of the foodstuff. This short initial immersion partially seals the foodstuff and the cooking medium can quickly recover to the required cooking temperature while the basket is raised, enabling the sealing to be completed when the basket is lowered again to re-immerse the foodstuff.

In its automatic operation controlled by the control unit the transport means may leave the basket lowered after the initial raising until the end of the cooking cycle, or it may cause the basket to be raised and lowered one or more further times after initial raising and subsequent lowering before the cooking cycle is completed. The number of times that the basket is caused to be lowered and raised in a cooking cycle may be variable to suit the type and/or amount of food to be fried.

The electronic memory included in the control unit provides for a range of cooking cycles of varying times and temperatures according to types of foodstuff and quantities and/or weights which the operator can select, as required. It then automatically programmes the raising and lowering of the basket to suit any selected cooking cycle.

The transport means may comprise an electric motor which drives the basket through transmission means of various kinds, for example a gear train, rack and pinion or worm, or a chain or belt drive system. Automatic control of the motor is conveniently provided electronically or electro-mechanically by the control unit. The motor is preferably a stepper motor which has the advantage of being easy to control accurately using an electronic controller.

The progress of the cooking cycle under the automatic control of the control unit may be entirely predetermined by the control unit before the start of the cycle. The fully automatically controlled cycle will therefore be of fixed length and the raising and lowering operations will take place at predetermined intervals dependent upon the initial selection made by the operator.

Alternatively, the temperature of the cooking medium may be continuously monitored during the cooking cycle and the duration of the cycle and the timing and the number of raising and lowering cycles can be adjusted by the control unit if the temperature of the cooking medium varies from its expected value. This method of control is more adaptable to variations in the initial condition of the food and gives more reliable results. The facility provided by the control for the operator to inspect the progress of the cooking of the foodstuff adds to this.

Electrically controlled means are known in deep fryers, as for example in US-A-3101043, for lowering the basket to immerse foodstuff at the beginning of a cooking cycle and to raise the basket automatically at the end of the cooking cycle. A deep fryer in accordance with the present invention may have such means modified to raise and lower the basket one or more times intermediate the lowering at the beginning and the raising at the end of the cooking cycle.

The means for passing hot air over the foodstuff when the basket is raised from the cooking medium during a cooking cycle, after the initial lowering of the basket and immersion of the foodstuff in the cooking medium, enables cooking of the foodstuff to be continued while the foodstuff is lifted out of of the cooking medium. This hastens the cooking cycle. The hot air cooking may be brought into operation automatically as the basket is raised, and discontinued as the basket is subsequently lowered. A fan and air heater can provide the hot air for the hot air cooking to be implemented. Such a fan reverses the normal flow of air through the machine so that air is drawn into the air to be heated when the food is raised in the basket.

An embodiment of the invention will now be described by way of example with reference to the accompanying drawings in which:
Figure 1 is an exploded diagram of transport means of a deep fryer embodying the invention;
Figure 2 shows a basket for use with a fryer embodying the invention; and
Figure 3 shows the operating arrangement of slide components of the transport means.

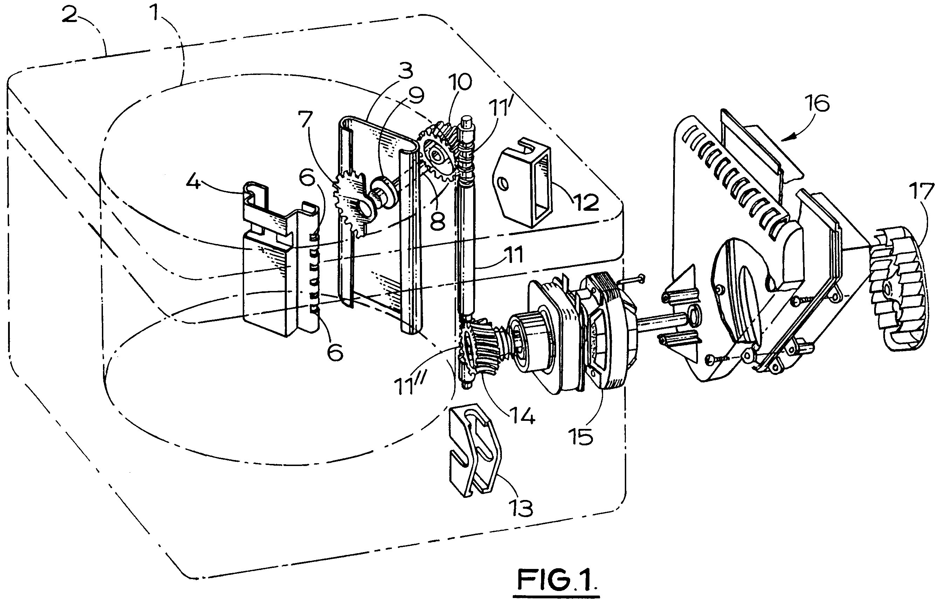

Referring first to Figure 1, a deep fryer comprises a housing 2 in which is contained a vessel 1 in the form of a deep pan. The vessel 1 contains the frying medium, typically oil or fat, which is heated by an electric heating element (not shown) contained within the vessel 1. A vertical guideway 3, being C-shaped in plan, is mounted on the inner wall of the vessel 1 with its open side facing into the vessel 1.

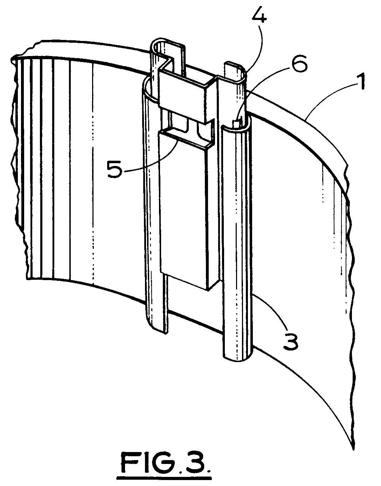

A slide 4 is located within the guideway 3 as shown in Figure 3. The slide 4 has two U-shaped sides connected by a web. The sides are shaped and dimensioned to fit within the sides of the guideway 3 such that the slide 4 may move vertically within the guideway 3 and is retained therein. The web is top-hat shaped in section and projects out of the open side of the guideway 3. Near the top of the web there is a slot 5 which extends across the projecting portion of the web to receive the bracket of the basket, as described below.

A plurality of holes 6 are provided, in a vertical row, through the two extremities of the sides of the web of the slide 4. A sector gear 7 is located within the guideway 3; its teeth engage with the holes 6. The sector gear 7 is mounted on a rotatable shaft 8 such that rotation of the shaft turns the sector gear 7 and causes the slide to move up or down the guideway 3.

The shaft 8 passes through the wall of the vessel 1 through a bush 9. A first gear wheel 10 is mounted close to the outer end of the shaft 8. A vertical shaft 11 has helical grooves 11′, 11˝ cut into its surface close to both of its ends. The teeth of the first gear wheel 10 engage in the groove 11′ at the upper end, thus rotation of the vertical shaft 11 rotates the first gear wheel 10. Bearings 12, 13 constrain the vertical shaft 22 to rotational movement only.

A second gear wheel 14 is provided in engagement with the lower helical groove 11˝ in the vertical shaft 11. The second gear wheel 14 is carried on the output shaft of a stepper motor 15. The complete arrangement allows rotational motion of the stepper motor 15 to be converted through the second gear wheel 14, the vertical shaft 11, the first gear wheel 10, the shaft 8 and the sector gear 7 to vertical motion of the slide 6. The stepper motor 15 is mounted on an enclosure 16 mounted on the housing 2 and also drives a cooling fan 17.

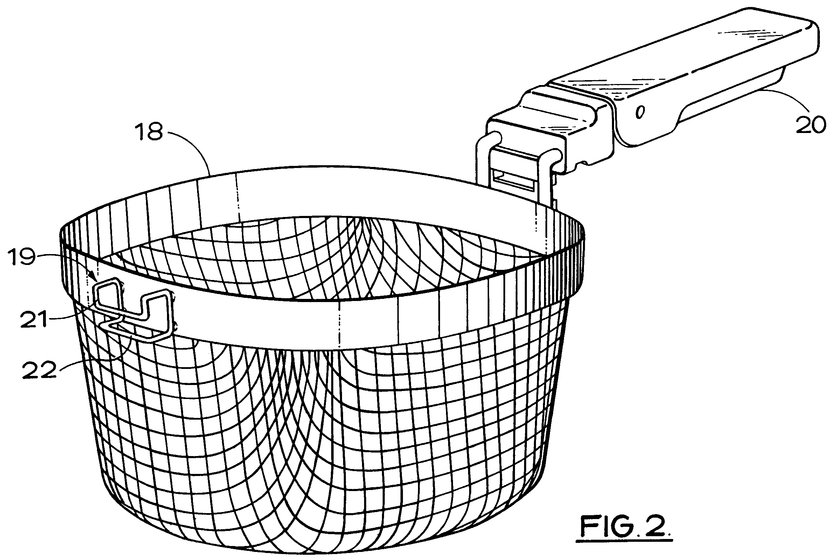

The basket 18, as shown in Figure 2, is provided with a bracket 19 diametrically opposite its handle 20. The bracket 19, which is formed from a bent piece of stiff wire, has a hook portion 21 shaped and dimensioned operatively to enter the slot 5 in the slide 4, and an abutment portion 22 arranged to operatively abut the slide 4 below the slot 5. The bracket 19 can support the basket 18 from the slide 4 in an orientation suitable for use.

A control unit (not shown) is provided which can, under control of the operator, rotate the stepper motor 15 to move the slide 4 between its upper and lower operating positions. The control unit, which is, conveniently, a microcomputer or microcontroller, also causes the basket 18 to be raised and lowered during the cooking cycle.

Controls are provided on the housing for selecting and setting the temperatures and times of cooking cycles and the operation of the electric motor to lower and raise the basket during the course of a selected cooking cycle. The number of times that the basket 18 is raised and lowered in the course of the cooking cycle depends upon the cycle selected. In some cycles the basket may be raised and lowered again only once after the initial lowering of the basket to aid the sealing of the foodstuff being fried, whereas in other cycles the basket may be raised and lowered several times before the cycles are completed.

In use, the operator first puts the food to be cooked into the basket which will, initially, be in its raised position. The operator then uses the control unit to set the appropriate cooking cycle for the food. This will preferably be selected by the operator setting controls on the control unit which relate to the food itself such as the weight of the food, the type of food (vegetables, meat, fish etc), whether or not the food is frozen etc. The control unit is programmed to calculate the optimum cooking cycle for the food to be cooked.

Once the controls have been set the operator then starts the cooking cycle. The first stage in the cycle is for the cooking medium to be heated to the cooking temperature. Once the correct temperature has been attained the basket is lowered into the cooking medium. At the optimum time or times, as determined by the control unit, the basket is automatically raised from and lowered into the cooking medium. At the end of the cooking cycle the basket is raised from the cooking medium and the heater for the cooking medium is switched off.

## Claims

1. A deep fryer comprising a vessel (1) in which a cooking medium is heated; a basket (18) in which foodstuff to be fried is supported and lowered into the vessel to immerse the foodstuff in the cooking medium; transport means (3, 4, 7, 8, 10, 11, 14, 15) operative to cause the basket to be lowered into the cooking medium at the start of a cooking cycle and raised from it at the end of said cooking cycle, said transport means being further operative to cause the basket to be automatically raised and subsequently lowered in the vessel a plurality of times during the cooking cycle; and control means for controlling the transport means, including an electronic memory providing for a range of cooking cycles, selectable by the operator, of varying times and temperatures and which programmes the number of times the basket is automatically raised and lowered during any selected cooking cycle and/or the time or times within the selected cycle at which the basket is automatically raised and lowered, and also including monitoring means for monitoring the temperature of the cooking medium during any selected cooking cycle, characterised in that a control is provided in association with the control means operable by the operator during any selected cooking cycle to raise the basket (18) from the cooking medium to allow inspection of the foodstuff and further operable to lower the basket and resume the cooking cycle, and in that there is means for passing hot air over the foodstuff when the basket is raised from the cooking medium during a cooking cycle.

2. A deep fryer according to claim 1 characterised in that the control means is a microcomputer.

3. A deep fryer according to claim 1 or claim 2 in which the transport means comprises an electric motor (15), connected by transmission means (7,8,10,11,14) to a slide (4), mounted for vertical movement within the vessel (1), the basket (18), in use being connected to the slide (4).

4. A deep fryer according to any preceding claim in which the means for passing hot air over the foodstuff when the basket is raised from the cooking medium comprises a fan and air heater, the fan drawing air into the air heater to be heated when the basket is raised.

## Patentansprüche

1. Ein Fritiergerät, welches aufweist; ein Gefäß (1), in welchem ein Kochmedium erhitzt wird; einen Drahteinsatz (18), in welchem ein zu fritierendes Nahrungsmittel getragen und in das Gefäß abgesenkt wird, um das Nahrungsmittel in das Kochmedium einzutauchen; Transportmittel (3, 4, 7, 8, 10, 11, 14, 15), welche betriebsfähig sind, um den Drahteinsatz zu veranlassen, zu Beginn eines Kochzyklus in das Kochmedium abgesenkt und an dem Ende dieses Kochzyklus aus dem Kochmedium angehoben zu werden, wobei die genannten Transportmittel weiterhin betriebsfähig sind, um den Drahteinsatz zu veranlassen, mehrmals während des Kochzyklus automatisch angehoben und darauffolgend in das Gefäß abgesenkt zu werden; und Steuermittel zum Steuern der Transportmittel, wobei die Steuermittel aufweisen; einen elektronischen Speicher, der einen Bereich von durch die Bedienungsperson auswählbaren Kochzyklen von veränderbaren Zeiten und Temperaturen bereithält und der die Anzahl der Zeiten programmiert, zu denen der Drahteinsatz während irgendeines ausgewählten Kochzyklus automatisch angehoben und abgesenkt wird, und/oder der die Zeit oder die Zeiten innerhalb des ausgewählten Zyklus programmiert, zu welcher oder zu welchen der Drahteinsatz automatisch angehoben und abgesenkt wird; und wobei die Steuermittel ferner eine Überwachungseinrichtung zum Überwachen der Temperatur des Kochmediums während irgendeines ausgewählten Kochzyklus aufweisen, **dadurch gekennzeichnet**, daß in Zuordnung zu den Steuermitteln eine Steuerung vorgesehen ist, die durch die Bedienungsperson während irgendeines ausgewählten Kochzyklus betätigbar ist, um den Drahteinsatz (18) aus dem Kochmedium anzuheben, um eine Beobachtung des Nahrungsmittels zu erlauben, wobei die Steuerung ferner betätigbar ist, um den Drahteinsatz abzusenken und den Kochzyklus wieder aufzunehmen, und daß eine Einrichtung vorgesehen ist, um Heißluft über das Nahrungsmittel zu leiten, wenn der Drahteinsatz aus dem Kochmedium während eines Kochzyklus angehoben wird.

2. Ein Fritiergerät gemäß Anspruch 1, **dadurch gekennzeichnet**, daß die Steuermittel ein Mikrocomputer sind.

3. Ein Fritiergerät gemäß Anspruch 1 oder Anspruch 2, bei welchem die Transportmittel einen elektrischen Motor (15) aufweisen, der durch Übertragungsmittel (7, 8, 10, 11, 14) mit einem Gleitelement (4) verbunden sind, das zum Zwecke einer vertikalen Bewegung innerhalb des Gefäßes (1) angeordnet ist, wobei der Drahteinsatz (18) bei der Anwendung mit dem Gleitelement (4) verbunden ist.

4. Ein Fritiergerät gemäß einem der vorhergehenden Ansprüche, bei welchem die Einrichtung zum Leiten von Heißluft über das Nahrungsmittel, wenn der Drahteinsatz aus dem Kochmedium angehoben wird, ein Gebläse und einen Lufterhitzer aufweist, wobei das Gebläse Luft in den Lufterhitzer zieht, welche zu erhitzen ist, wenn der Drahteinsatz angehoben ist.

## Revendications

1. Friteuse comprenant une cuve (1) dans laquelle est chauffé un bain de cuisson ; un panier (18) destiné à recevoir un aliment à frire et à le plonger dans la cuve afin d'immerger l'aliment dans le bain de cuisson ; un moyen de transport (3,4,7,8,10,11,14,15) destiné à faire plonger le panier dans le bain de cuisson au début du cycle de cuisson et à l'extraire à la fin dudit cycle de cuisson, ledit moyen de transport étant en outre destiné à extraire automatiquement le panier et subséquemment à le plonger dans la cuve plusieurs fois pendant le cycle de cuisson ; et un moyen de commande pour commander le moyen de transport et comportant une mémoire électronique qui assure une gamme de cycles de cuisson, choisie par l'utilisateur et comportant une variété de durées et de températures, qui programme le nombre de fois que le panier est automatiquement extrait et plongé pendant tout cycle de cuisson choisi et/ou le temps ou les temps dans le cycle choisi auquel le panier est automatiquement extrait et plongé, et qui comporte aussi des moyens de contrôle pour contrôler la température du bain de cuisson durant tout cycle de cuisson choisi ;
**caractérisée en ce qu**'une commande est prévue en association avec le moyen de commande, actionnable par l'utilisateur pendant tout cycle de cuisson choisi pour extraire le panier (18) du bain de cuisson afin de permettre l'inspection de l'aliment et permettre en outre de plonger le panier et terminer le cycle de cuisson, et en ce qu'elle comprend des moyens pour faire passer de l'air chaud sur l'aliment lorsque le panier est extrait du bain de cuisson pendant un cycle de cuisson.

2. Friteuse selon la revendication 1,
**caractérisée en ce que** le moyen de commande est un micro-contrôleur.

3. Friteuse selon la revendication 1 ou 2,
**caractérisée en ce que** le moyen de transport comprend un moteur électrique (15), lié, par le moyen de transmission (7,8,10,11,14), au coulisseau (14) et monté pour effectuer un mouvement vertical dans la cuve (1), le panier (18), en utilisation, étant lié au coulisseau (4).

4. Friteuse selon l'une quelconque des revendications précédentes,
**caractérisée en ce que** le moyen destiné à réchauffer l'aliment avec de l'air chaud quand le panier est extrait du moyen de cuisson comprend un ventilateur et un chauffage d'air, le ventilateur aspirant l'air dans le chauffage d'air pour y être chauffé quand le panier est extrait.
